# FASCICULE DE BREVET EUROPEEN

(11) **EP 3 344 739 B1**
(45) Date de publication et mention de la délivrance du brevet: **08.07.2020**
(21) Numéro de dépôt: 16775760.8
(22) Date de dépôt: 02.09.2016
(51) Int. Cl.: C11B 13/02, C10L 1/18, C10L 1/188, C10L 10/08, C11C 1/02, C11C 1/08, C10L 1/19

(54) **ADDITIF DE LUBRIFIANCE POUR CARBURANT A FAIBLE TENEUR EN SOUFRE.**
SCHMIERADDITIV FÜR KRAFTSTOFF MIT NIEDRIGEM SCHWEFELGEHALT
LUBRICITY ADDITIVE FOR FUEL WITH A LOW SULFUR CONTENT

(30) Priorité: 03.09.2015 FR 1558161
(43) Date de publication de la demande: 11.07.2018
(73) Titulaire: Total Marketing Services, 92800 Puteaux (FR)
(72) Inventeur: BEN SAHEL, Hakim, 01700 Miribel (FR); LANGLOIS, Olivier, 69700 MONTAGNY (FR); HEROU, Julien, 78200 Fontenay Mauvoisin (FR); GERMANAUD, Laurent, 38540 Heyrieux (FR)
(74) Mandataire: Fédit-Loriot
(86) Numéro de dépôt international: PCT/FR2016/052168
(87) Numéro de publication internationale: WO 2017/037392

(56) Documents cités:
- WO-A1-2013/098524
- WO-A1-2014/102492
- RU-C1- 2 272 052
- DATABASE WPI Week 200774 Thomson Scientific, London, GB; AN 2007-787828 XP002755256, & CN 1 958 751 A (LU X) 9 mai 2007 (2007-05-09)
- B M Kulkarni ET AL: "Investigation of acid oil as a source of biodiesel", Indian Journal of Chemical Technology, 1 septembre 2008 (2008-09-01), pages 467-471, XP055256689, Extrait de l'Internet: URL:http://nopr.niscair.res.in/bitstream/1 23456789/2858/1/IJCT 15(5) 467-471.pdf [extrait le 2016-03-09]
- ALBA TRES ET AL: "Re-esterified oils from palm acid oil do not alter pork fatty acid composition", EUROPEAN JOURNAL OF LIPID SCIENCE AND TECHNOLOGY., vol. 117, no. 9, 24 août 2015 (2015-08-24) , pages 1406-1416, XP055256688, DE ISSN: 1438-7697, DOI: 10.1002/ejlt.201400544
- LUO HUI ET AL: "Effects of Fatty Acids on Low-Sulfur Diesel Lubricity： Experimental Investigation, DFT Calculation and MD Simulation", CHINA PETROLEUM PROCESSING AND PETROCHEMICAL TECHNOLOGY, vol. 15, no. 2, 30 juin 2013 (2013-06-30), pages 74-81, XP055269294, CN ISSN: 1008-6234

## Description

### DOMAINE TECHNIQUE

Afin de limiter les rejets des émissions polluantes, de nombreuses réglementations imposent des teneurs en composés soufrés relativement basses dans les carburants, notamment les carburants de type gazole. A cet effet, les hydrocarbures utilisés pour la fabrication de carburants sont soumis à des procédés d'hydrotraitement et d'hydrocraquage pour éliminer les composés soufrés qu'ils contiennent naturellement. Cette élimination des composés soufrés entraine une perte du pouvoir lubrifiant des carburants obtenus.

Or, les carburants de type gazole et les carburants destinés à l'aviation doivent posséder des aptitudes à la lubrification pour la protection des pompes, des systèmes d'injection et de toutes les parties en mouvement avec lesquels ces produits entrent en contact dans un moteur à combustion interne. Des additifs doivent alors être ajoutés à ces carburants afin de restaurer leur pouvoir lubrifiant.

L'additif de lubrifiance décrit est plus particulièrement destiné aux carburants pour moteur à combustion interne présentant une faible teneur en soufre, par exemple inférieur à 500ppm (poids).

L'acidification d'une pâte de neutralisation obtenue par un procédé de raffinage d'une huile végétale et/ou animale permet d'obtenir une huile dite huile acide. L'invention concerne l'utilisation d'une huile acide ou d'un mélange d'huiles acides issues d'une ou plusieurs pâtes de neutralisation, comme additif de lubrifiance pour carburant, notamment à faible teneur en soufre.

### ART ANTERIEUR

Il est connu d'utiliser les acides gras comme additifs de lubrifiance. En général, les acides gras utilisés sont produits par fractionnement des huiles végétales ou animales. Par exemple, les acides gras de l'huile de tall ou TOFA (Tall Oil Fatty Acids) sont connus pour avoir de bonnes propriétés de lubrifiance dans les gazoles à faible taux de soufre (WO9804656). Ces acides gras présentent un indice d'acide fort. Le gain sur l'amélioration de la lubrifiance est important à faible dosage mais tend à diminuer au fur et à mesure que le dosage augmente.

Il est par ailleurs connu d'utiliser les mono-glycérides et di-glycérides comme additifs de lubrifiance. Les mono- et di-glycérides sont des esters produits de la réaction entre des acides gras et le glycérol. Ils présentent un indice d'acide très faible : on parle de lubrifiance neutre. Cependant, l'amélioration de la lubrifiance n'est pas immédiate à faible dosage, nécessitant l'utilisation de quantités importantes, ce qui augmente le coût du traitement.

Il existe donc un besoin pour de nouveaux additifs de lubrifiance pour carburant, notamment de moteur à combustion interne, qui soient peu coûteux et efficaces, notamment pour les carburants de type gazole.

Le document CN1958751 décrit une composition de carburant comprenant du gazole, des additifs et une huile acide ou des acides gras ou un mélange de méthanol et d'huile acide.

Le document "Effects of Fatty Acids on Low-Sulfur Diesel Lubricity: Experimental Investigation, DFT Calculation and MD Simulation", China Petroleum Processing and Petrochemical Technology, Vol. 15, No. 2, pp 74-81, 30 juin 2013 décrit les effets des acides gras sur la capacité lubrifiante des gazoles à faible teneur en soufre.

### BREF RESUME DE L'INVENTION

Les pâtes de neutralisation sont des sous-produits du raffinage des huiles brutes (végétales ou animales). Elles renferment les espèces saponifiables présentes dans les corps gras après leur extraction. Leur acidification permet d'obtenir un mélange d'acides gras, d'esters et de triglycérides appelé « huile acide ». Les huiles acides sont ainsi des mélanges de matières actives à faible coût de revient.

Les huiles acides issues de l'acidification d'une pâte de neutralisation obtenue par un procédé de raffinage d'une huile végétale et/ou animale présentent de bonnes propriétés à froid comparativement aux acides gras ou esters de di- ou triglycérides généralement utilisés en lubrifiance gazole.

Il est décrit un additif de lubrifiance pour carburant de moteur à combustion interne directement issu d'un procédé d'acidification d'au moins une pâte de neutralisation obtenue par un procédé de raffinage d'au moins une huile choisie parmi une huile végétale et/ou animale.

L'additif de lubrifiance décrit est ainsi issu uniquement de la biomasse.

L'invention concerne l'utilisation d'une ou plusieurs huile(s) acide(s), directement issue(s) de l'acidification d'au moins une pâte de neutralisation comme additif de lubrifiance de carburant pour moteur à combustion interne, la pâte de neutralisation étant obtenue par un procédé de raffinage d'au moins une huile choisie parmi une huile végétale et/ou animale.

Il est aussi décrit une composition de carburants pour moteur à combustion interne, notamment un gazole, présentant une teneur en soufre inférieure à 500ppm et comprenant un additif de lubrifiance selon l'invention.

Avantageusement, la teneur de la composition de carburant en additif de lubrifiance est suffisante pour que la composition de carburants présente un pouvoir lubrifiant inférieur ou égal à 500µm, de préférence inférieur ou égal à 460µm, préférentiellement inférieur ou égal à 400µm dans les conditions de l'essai HFRR (« High Frequency Reciprocating Rig ») tel que décrit dans l'article SAE 932692 par J.W. HADLEY de l'université de Liverpool.

Avantageusement, la teneur de la composition de carburants en additif de lubrifiance est inférieure ou égale à 1000ppm (en poids), de préférence inférieure ou égale à 500ppm en poids, préférentiellement comprise entre 10 et 400ppm en poids (bornes incluses).

Il est également décrit un procédé de fabrication d'une composition de carburants pour moteur à combustion interne comprenant une étape au cours de laquelle on ajoute à au moins un carburant au moins un additif de lubrifiance directement issu d'un procédé d'acidification d'au moins une pâte de neutralisation obtenue par un procédé de raffinage d'au moins une huile choisie parmi une huile végétale et/ou animale. La teneur en additif de lubrifiance de la composition de carburants peut être telle que précisée ci-dessus.

Il est également décrit un procédé pour améliorer la lubrifiance d'une composition de carburants de moteur à combustion interne comprenant une étape au cours de laquelle on ajoute à une composition de carburants au moins un additif de lubrifiance directement issu d'un procédé d'acidification d'au moins une pâte de neutralisation obtenue par un procédé de raffinage d'au moins une huile choisie parmi une huile végétale et/ou animale. La teneur en additif de lubrifiance de la composition de carburants peut être telle que précisée ci-dessus.

### DESCRIPTION DETAILLEE DE L'INVENTION

L'additif de lubrifiance décrit est directement issu d'un procédé d'acidification d'au moins une pâte de neutralisation. Cette pâte de neutralisation est obtenue, notamment directement, par un procédé de raffinage d'au moins une huile choisie parmi une huile végétale et/ou animale.

L'additif de lubrifiance décrit est ainsi une huile acide ou un mélange d'huiles acides.

Une huile acide peut être définie comme étant des compositions d'acides gras neutralisés par une base puis acidifiés.

Les acides gras proviennent avantageusement directement de la saponification d'une huile végétale et/ou animale, telle que, sans être limitatif, une huile de tournesol, de soja, de colza, de lin, de palme, de coprah, d'arachide, d'olive, une huile de poisson, et comprenant classiquement en très grande majorité des chaînes carbonées en C₁₆-C₁₈, saturées ou insaturées, parmi lesquelles de préférence des chaînes carbonées insaturées en C₁₈. Les huiles végétales comprennent habituellement de l'acide palmitique, oléique, linoléique et d'autres acides en plus faibles quantités. Les compositions d'acides gras neutralisés par une base sont typiquement des pâtes de neutralisation.

Selon un mode de réalisation préféré, l'additif de lubrifiance décrit est uniquement issu d'une ou plusieurs huiles végétales. Autrement dit, il est directement issu d'un procédé d'acidification d'au moins une pâte de neutralisation obtenue par un procédé de raffinage d'au moins une huile végétale.

L'additif de lubrifiance décrit peut en outre avantageusement présenter une ou plusieurs des caractéristiques suivantes :
(a) une teneur en acides gras libres supérieure ou égale à 5% en poids, avantageusement supérieure ou égale à 10% en poids, de préférence de 10 à 90% en poids, plus préférentiellement de 30 à 70% en poids,
(b) une teneur en triglycérides supérieure ou égale à 5% en poids, avantageusement supérieure ou égale à 15% en poids, de préférence de 10 à 60% en poids,
(c) une teneur en acides gras contenant plus de deux insaturations inférieure ou égale à 40% en poids, de préférence inférieure ou égale à 20% en poids, préférentiellement inférieure ou égale à 10% en poids, par exemple de 0,05 à 10% en poids,
(d) une teneur en acides gras C₁₈ :1 et C₁₈ :2 supérieure ou égale à 40% en poids, de préférence supérieure ou égale à 60% en poids, préférentiellement supérieure ou égale à 70% en poids, par exemple de 70 à 95% en poids,
(e) un point d'écoulement inférieur ou égal à -3°C, de préférence inférieur ou égal à -9°C.

Avantageusement, l'additif de lubrifiance décrit peut présenter les caractéristiques a) et b).

Avantageusement, l'additif de lubrifiance décrit peut présenter les caractéristiques a), b) et e).

Avantageusement, l'additif de lubrifiance décrit peut présenter la totalité des caractéristiques a) à e).

Le procédé d'acidification permettant d'obtenir directement l'additif de lubrifiance selon l'invention peut comprendre :
a) une étape d'extraction des acides gras présents dans au moins une pâte de neutralisation issue du raffinage d'une ou plusieurs huiles choisie(s) parmi une huile végétale et/ou une huile animale, cette étape d'extraction étant réalisée en milieu acide dans des conditions efficaces pour former une phase aqueuse et une phase organique comprenant lesdits acides gras,
b) une étape de séparation au cours de laquelle on sépare ladite phase organique précédemment formée et on la récupère.

La phase organique récupérée à l'étape b) constitue une huile acide. Une telle huile acide présente généralement une teneur en eau inférieure ou égale à 3%pds.

### Pâte de neutralisation utilisée lors de l'étape a)

La pâte de neutralisation traitée à l'étape a) peut être un mélange de pâtes de neutralisation issues du raffinage de différentes huiles ou peut être une pâte de neutralisation issue du raffinage d'une unique huile.

De telles pâtes de neutralisation proviennent notamment directement de la saponification d'une huile végétale et/ou d'une huile animale.

La pâte de neutralisation traitée à l'étape a) peut ainsi être obtenue, notamment directement, par un procédé de raffinage d'une huile végétale et/ou animale comprenant :
a1) une étape de saponification d'une huile végétale ou animale ou d'un mélange d'huiles végétales et/ou animales, dans des conditions efficaces pour saponifier les acides gras libres présents dans l'huile ou le mélange d'huiles et pour former une pâte de neutralisation,
a2) une étape de séparation de l'huile ou du mélange d'huiles et de la pâte de neutralisation formée lors de l'étape a1).

En général, l'étape a1) de saponification est réalisée par ajout d'une base, généralement de la soude, et permet d'éliminer les acides gras libres présents dans l'huile, lesquels se retrouvent dans la pâte de neutralisation (« soapstock » en anglais) sous forme de sels alcalins d'acides gras. Avant cette étape a1) de saponification, l'huile végétale et/ou animale peut subir une opération de dégommage ou démucilagination visant à éliminer les phospholipides, lécithines, complexes sucrés et autres impuretés.

L'étape a2) de séparation de l'huile et de la pâte de neutralisation résultant de la saponification peut être réalisée par centrifugation.

Les pâtes de neutralisation comprennent ainsi essentiellement des acides gras neutralisés par une base.

En plus des acides gras neutralisés par une base, les pâtes de neutralisation peuvent contenir, selon leur origine et la qualité de la saponification, des phospholipides ou des mono-, di- ou triglycérides n'ayant pas réagi. Habituellement, les acides gras ont des chaînes carbonées en C₁₂-C₂₄, de préférence en C₁₆-C₂₀ ou mieux en C₁₆-C₁₈.

Une pâte de neutralisation est donc un produit issu de la biomasse. Des avantages associés à de telles pâtes de neutralisation résident, d'une part, sur leur bas coût de mise en œuvre, et, d'autre part, dans l'absence de substances toxiques indésirables, telles que les pesticides, les aflatoxines, les métaux lourds, les précurseurs de dioxines et furanes, les PCB et les nitrites.

### Etape a) d'extraction

L'étape a) d'extraction du procédé d'acidification a pour fonction d'extraire les acides gras contenus dans la pâte de neutralisation. Cette extraction est réalisée en milieu acide dans des conditions efficaces pour former une phase aqueuse et une phase organique comprenant les acides gras initialement contenus dans la pâte de neutralisation.

Cette phase organique comprenant les acides gras est généralement appelée « huile acide », ou encore « huile de neutralisation ».

L'acide utilisé pour extraire les acides gras présents dans la pâte de neutralisation sous forme de sels est généralement un acide inorganique, tel que par exemple l'acide sulfurique, l'acide phosphorique ou l'acide chlorhydrique.

L'acide sulfurique est toutefois préféré car il permet une meilleure extraction des acides gras à un coût économique favorable.

L'extraction est généralement réalisée sous chauffage, à une température comprise entre 70 et 100°C (bornes incluses), de préférence entre 80 et 90°C (bornes incluses).

Afin d'obtenir une bonne extraction des acides gras, on maintient de préférence un pH acide le temps de la réaction, par exemple un pH inférieur ou égal à 6, de préférence inférieur ou égal à 4.

Le temps de réaction est choisi pour permettre une extraction de la totalité des acides gras. Il est par exemple de 1 heure à 12 heures, en fonction de la géométrie du réacteur, de la nature et de la composition de la charge à traiter.

L'extraction est de préférence réalisée sous agitation.

On obtient ainsi la formation d'une phase aqueuse et d'une phase organique contenant les acides gras.

### Etape b) de séparation

Au cours de cette étape, on sépare la phase organique formée lors de l'étape a) de la phase aqueuse. Autrement dit, on isole l'huile acide formant l'additif de lubrifiance selon l'invention.

Cette étape b) de séparation peut être réalisée par distillation, décantation, voire centrifugation. Cette étape peut être mise en œuvre par tous dispositifs appropriés, connus et disponibles dans le commerce.

Avantageusement, cette séparation est réalisée par décantation, suivie d'une élimination de la phase aqueuse. La décantation dépend de la différence de densité des liquides et de leur viscosité, paramètres qui peuvent être modifiés de manière connue par l'homme de l'art pour favoriser la séparation le cas échéant.

L'huile acide obtenue peut être utilisée comme un additif de lubrifiance de carburant pour moteur à combustion interne pouvant présenter une ou plusieurs des caractéristiques a) à e) mentionnées plus haut.

Avantageusement, avant son utilisation comme additif de lubrifiance, l'huile acide peut subir une ou plusieurs étapes de traitement choisies parmi une centrifugation, une filtration, une précipitation. Notamment, une étape de centrifugation peut permettre d'obtenir une teneur en eau inférieure ou égale à 1% en poids, voire inférieure ou égale à 0,8% en poids, en particulier de 0,1% à 0,7% en poids.

Outre l'élimination d'eau, récupérée dans une phase aqueuse, la centrifugation peut également permettre l'élimination d'une partie des résidus solides en suspension.

L'additif de lubrifiance précédemment décrit peut avantageusement être ajouté à une composition de carburants pour moteur à combustion interne afin d'en améliorer la lubrifiance.

La composition de carburants peut comprendre au moins un carburant ou combustible hydrocarboné liquide choisi parmi les gazoles, les carburants diesel, les essences, les biocarburants, les carburants jet, les fiouls domestiques (FOD) et les fiouls lourds, de préférence les gazoles et les carburants diesel.

Selon un mode de réalisation particulier, la composition de carburant peut comprendre au moins un carburant ou combustible choisi parmi les distillats moyens de température d'ébullition comprise entre 100 et 500°C, de préférence 140 à 400 °C.

Ces distillats moyens peuvent, par exemple, être choisis parmi les distillats obtenus par distillation directe d'hydrocarbures bruts, les distillats sous vide, les distillats hydrotraités, des distillats issus du craquage catalytique et/ou de l'hydrocraquage de distillats sous vide, les distillats résultant de procédés de conversion type ARDS (par désulfuration de résidu atmosphérique) et/ou de viscoréduction, les distillats issus de la valorisation des coupes Fischer Tropsch, les distillats résultant de la conversion BTL (acronyme du terme anglais *biomass to liquid*) de la biomasse végétale et/ou animale, et/ou leurs mélanges.

Les carburants peuvent également contenir des distillats issus des opérations de raffinage plus complexes que ceux issus de la distillation directe des hydrocarbures. Les distillats peuvent, par exemple, provenir des procédés de craquage, hydrocraquage et/ou craquage catalytique et des procédés de viscoréduction.

Les carburants peuvent également contenir de nouvelles sources de distillats, parmi lesquelles on peut notamment citer :
- les coupes les plus lourdes issues des procédés de craquage et de viscoréduction concentrées en paraffines lourdes, comprenant plus de 18 atomes de carbone,
- les distillats synthétiques issus de la transformation du gaz tels que ceux issus du procédé Fischer Tropsch,
- les distillats synthétiques résultant du traitement de la biomasse d'origine végétale et/ou animale, comme notamment le NexBTL,
- et les huiles végétales et/ou animales et/ou leurs esters, de préférence, les esters méthyliques d'acides gras (EMAG) ou éthyliques d'acides gras (EEAG), en particulier des esters méthyliques d'huiles végétales (EMHV) ou esters éthyliques d'huiles végétales (EEHV),
- les huiles végétales et/ou animales hydrotraitées et/ou hydrocraquées et/ou hydrodéoxygénées (HDO),
- ou encore les biodiesels d'origine animale et/ou végétale.

La composition de carburants peut comprendre uniquement des nouvelles sources de distillats ou être composée d'un mélange avec des distillats moyens pétroliers classiques comme base carburant type diesel et/ou base de fioul domestique. Ces nouvelles sources de distillats comprennent en général de longues chaînes paraffiniques supérieures ou égales à 10 atomes de carbone et, préférentiellement de C₁₄ à C₃₀.

En général, la teneur en soufre de la composition de carburant selon l'invention est inférieure à 500 ppm, de préférence inférieure à 50 ppm, voire même inférieure à 10 ppm et avantageuse sans soufre, notamment pour les carburants de type gazole.

La composition de carburant décrite peut être obtenue par un procédé de fabrication comprenant une étape au cours de laquelle au moins un carburant est additivé d'au moins un additif de lubrifiance directement issu d'un procédé d'acidification d'au moins une pâte de neutralisation obtenue par un procédé de raffinage d'au moins une huile choisie parmi une huile végétale et/ou animale.

L'additif de lubrifiance décrit peut être utilisé dans la composition de carburant en association avec un ou plusieurs additifs additionnels. Ces additifs additionnels peuvent être choisis parmi les dispersants/détergents, les huiles porteuses, les désactivateurs de métaux, les passivateurs métalliques, les antioxydants, les colorants, les additifs antistatiques, les inhibiteurs de corrosion, les biocides, les marqueurs, les stabilisateurs thermiques, les émulsifieurs, les additifs antistatiques, les agents réducteurs de frottements, les surfactants, les améliorants de cétanes, les agents anti-trouble, les additifs améliorant la conductivité, les réodorants et leurs mélanges.

Parmi les autres additifs additionnels, on peut citer particulièrement :
a) les additifs procétane, tels que par exemple les nitrates d'alkyle ;
b) les additifs anti-mousse, des exemples de tels additifs sont donnés dans EP0861182, EP0663000, EP0736590 ;
c) les additifs détergents et/ou anti-corrosion, des exemples de tels additifs sont donnés dans EP0938535, US2012/0010112 et WO2012/004300 ;
e) les additifs de point de trouble. Des exemples de tels additifs sont donnés dans EP0071513, EP0100248, FR2528051, FR2528051, FR2528423, EP112195, EP0172758, EP0271385, EP0291367 ;
f) les additifs d'anti-sédimentation et/ou dispersants de paraffines. Des exemples de tels additifs sont donnés dans EP0261959, EP0593331, EP0674689, EP0327423, EP0512889, EP0832172, US2005/0223631, US5998530, WO1993/014178 ;
g) les additifs polyfonctionnels d'opérabilité à froid choisis notamment dans le groupe constitué par les polymères à base d'oléfine et de nitrate d'alkényle tels que décrits dans EP0573490 ;
h) des additifs améliorant la tenue à froid et la filtrabilité (CFI), tels que les copolymères éthylène/vinyl acétate (EVA) et/ou éthylène/vinyl propionate (EVP) ;
i) d'autres antioxydants de type phénoliques encombrés ou aminés de type paraphénylène diamine alkylés ;
j) les passivateurs de métaux, tels que les triazoles, les benzotriazoles alkylés et les tolutriazoles alkylés ;
k) les séquestrants de métaux comme la disalicylidène propane diamine (DMD) ;
l) les neutralisateurs d'acidité tels que les alkylamines cycliques.

Une composition de carburants peut ainsi être obtenue par un procédé comprenant :
(1) une étape de fourniture d'un ou plusieurs carburants,
(2) une étape d'addition au(x) carburant(s) fournis à l'étape (1) d'au moins un additif de lubrifiance selon l'invention.

Le procédé peut optionnellement comprendre une étape d'addition d'au moins un additif additionnel du type décrit ci-dessus.

Pour expliciter les avantages de la présente invention, des exemples sont donnés ci-après à titre illustratif mais non limitatif de la portée de l'invention revendiquée.

Les notations suivantes ont été utilisées :
HA : huile acide,
AG : Acides gras libres,
MG : mono-glycérides,
DG : di-glycérides,
TG : triglycérides,
EMVH : Esters méthyliques d'huiles végétales,
Cx :y, acide gras présentant x atomes de carbone et y insaturations (doubles liaisons carbone-carbone).

### EXEMPLES

Le pouvoir lubrifiant de plusieurs additifs dans deux carburants de type gazole pour moteur diesel ont été testés dans les conditions de l'essai HFRR (« High Frequency Reciprocating Rig ») tel que décrit dans l'article SAE 932692 par J.W. HADLEY de l'université de Liverpool. Ce pouvoir lubrifiant peut ainsi être défini comme la propriété d'un liquide déterminée en mesurant la marque d'usure produite par le contact d'une bille oscillante sur une plaque fixe immergée dans le liquide et dans des conditions étroitement contrôlées.

Le test consiste à imposer conjointement à une bille d'acier en contact avec un plateau métallique immobile, une pression correspondant à un poids de 200g et un déplacement alternatif de 1mm à une fréquence de 50Hz. La bille en mouvement est lubrifiée par la composition à tester. La température est maintenue à 60°C pendant toute la durée de l'essai, c'est-à-dire 75min. Le pouvoir lubrifiant est exprimé par la valeur moyenne des diamètres de l'empreinte d'usure de la bille sur le plateau. Plus le diamètre d'usure est faible, meilleur est le pouvoir lubrifiant. Généralement un diamètre d'usure inférieur ou égal à 460µm ± 63µm est requis pour un carburant de type gazole.

Les caractéristiques des gazoles testés sont rassemblées dans le tableau 1.

Différents additifs ont été ajoutés à ces gazoles en des quantités allant de 100 à 300ppm (en poids) selon les tests. Un test HFRR a été mis en œuvre pour chaque additif afin de déterminer le pouvoir lubrifiant.

Le tableau 2 rassemble les caractéristiques des huiles acides testées comme additif de lubrifiance.

Toutes les huiles acides testées sont directement issues d'un procédé d'acidification d'au moins une pâte de neutralisation obtenue par un procédé de raffinage d'une ou plusieurs huiles végétales et/ou animales.

### Obtention des huiles acides testées

Une pâte de neutralisation a subi le traitement suivant :
- injection de 120l d'acide sulfurique à 97% dans un réacteur contenant 4000kg de pâte de neutralisation, où la température est de 80 à 90°C. Le temps de réaction est de 24 heures, sous contrôle en continu du pH afin de maintenir le pH à une valeur inférieure à 4,
- décantation de la phase aqueuse et de la phase organique formées au cours de l'étape a1) puis élimination de la phase aqueuse.

**Tableau 1 : caractéristiques des gazoles**

| | Gazole N°1 | Gazole N°2 | *Norme* | *Unité* |
|---|---|---|---|---|
| Température Limite de Filtrabilité | -19 | -6 | NF EN 116 | °*C* |
| Point d'écoulemen t | -18 | -9 | ASTM D97 | °*C* |
| Point de trouble | -8 | -6 | ASTM D7689 | °*C* |
| Masse volumique à 15 C | 825,1 | 838,6 | NF EN ISO12185 | *kg*/*m³* |
| Teneur en Soufre | <10 | <10 | EN ISO20846 EN ISO20884 | *Mg*/*kg* |
| Teneur en EMVH | 0,03 | ≈ 0 | EN 14078 | *%vol* |
| Distillation | | | ASTM D86 | °C |
| 0% | 165 | 176 | | |
| 5% | 195 | 193 | | |
| 10% | 209 | 201 | | |
| 20% | 229 | 218 | | |
| 30% | 245 | 235 | | |
| 40% | 259 | 252 | | |
| 50% | 273 | 268 | | |
| 60% | 287 | 284 | | |
| 70% | 302 | 300 | | |
| 80% | 320 | 318 | | |
| 90% | 343 | 340 | | |
| 95% | 362 | 356 | | |
| 100% | 371 | 365 | | |

**Tableau 2 : caractéristiques des huiles acides testées en tant qu'additif de lubrifiance**

| | HA de colza 1 | HA de colza 2 | HA végétale mixte (colza, tournesol...) | HA de lin | HA de poisson |
|---|---|---|---|---|---|
| AG (% pds) | 39,1 | 54,7 | 67,9 | 38,1 | 47,9 |
| MG (% pds) | 0,9 | 2,6 | 1,4 | 1,6 | 1,4 |
| DG (% pds) | 4,4 | 8,5 | 9,2 | 12,9 | 8 |
| TG (% pds) | 55,3 | 31.5 | 19,2 | 46,7 | 41,5 |
| Point d'écoulemen t (°C) | -15 | -12 | -21 | 0 | 15 |
| Teneur en AG C18:1 + C18:2 (%poids) | 90,9 | 80,2 | 77,1 | 37,5 | 20,8 |
| Teneur en AG à nombre d'insaturations >2 (%poids) | 0,1 | 7,7 | 0,1 | 51,1 | 35,3 |

Le tableau 3 rassemble les caractéristiques de deux additifs de lubrifiance couramment utilisés. L'additif Comparatif 1 est un mélange d'esters d'acides gras contenant essentiellement des mono- et di-glycérides. L'additif Comparatif 2 est un mélange contenant essentiellement des acides gras libres.

**Tableau 3 : caractéristiques des additifs comparatifs testés**

| additif | Comparatif 1 | Comparatif 2 (TOFA) |
|---|---|---|
| AG (% pds) | 0 | 96,9 |
| MG (% pds) | 45,1 | 0 |
| DG (% pds) | 42,5 | 0 |
| TG (% pds) | 10 | 0 |
| Point d'écoulement (°C) | -21 | -15 |
| Teneur en AG C18:1 + C18:2 (%poids) | 78,2 | 86,1 |
| Teneur en AG à nombre d'insaturations >2 (%poids) | 8,2 | 0,3 |

### Exemple 1

Dans cet exemple, différents additifs ont été ajoutés au gazole N°1.

Les résultats sont rassemblés dans le tableau 4.

Les valeurs indiquées correspondent à la moyenne des résultats obtenus, lesquels sont compris dans un intervalle de ±10µm.

On constate que l'huile acide issue d'huile de Lin est la moins efficace des huiles acides en lubrifiance (essai HFRR). Pour une teneur de 300ppm, le résultat de l'essai HFRR est supérieur à la spécification de 460µm pour les gazoles alors que cette spécification est respectée pour les autres huiles acides testées. Contrairement aux autres huiles acides, cette huile acide issue de l'huile de lin présente une teneur en acides gras présentant plus de 2 insaturations supérieure à 40% en poids.

**Tableau 4 : pouvoir lubrifiant du Gazole N°1 en présence de différents additifs**

| additif | Dosage (mg/kg) | **HFRR (µm)** |
|---|---|---|
| HA de colza 1 | 0 | **580** |
| | 200 | **431** |
| | 300 | **428** |
| HA de lin | 0 | 580 |
| | 200 | 524 |
| | 300 | 489 |
| HA de poisson | 0 | 580 |
| | 200 | 416 |
| | 300 | 408 |
| HA végétale mixte (colza, tournesol...) | 0 | **580** |
| | 200 | **472** |
| | 300 | **422** |
| Comparatif 1 | 0 | **580** |
| | 200 | **504** |
| | 300 | **409** |
| Comparatif 2 | 0 | **580** |
| | 200 | **457** |
| | 300 | **428** |

### Exemple 2

Dans cet exemple, différents additifs ont été ajoutés au gazole N°2.

Les résultats sont rassemblés dans le tableau 5.

Les valeurs indiquées correspondent à la moyenne des résultats obtenus, lesquels sont compris dans un intervalle de ±10µm.

On constate que l'huile acide issue d'huile de poisson est moins efficace en lubrifiance (essai HFRR) que les huiles acides issues d'huiles végétales.

On notera en outre que l'huile acide issue d'huile de poisson et l'huile acide issue d'huile de lin présentent des points d'écoulement supérieurs à -10°C. Pour ces deux huiles acides, les teneurs en acides gras C₁₈ :1 + C₁₈ :2 sont inférieures à 40% en poids. En outre, la teneur en acides gras présentant un nombre d'insaturations supérieur à 2 est supérieure à 10%.

Les autres huiles acides atteignent la spécification de 460µm pour une teneur de seulement 200ppm.

On note également que l'huile HA de colza 1 présente les meilleurs résultats, en particulier supérieurs à l'huile TOFA (comparatif n°2).

**Tableau 5 : pouvoir lubrifiant du Gazole N°2 en présence de différents additifs**

| Additif | Dosage (mg/kg) | **HFRR (µm)** |
|---|---|---|
| HA de colza 1 | 0 | **608** |
| | 200 | **424** |
| HA de colza 2 | 0 | **608** |
| | 200 | **445** |
| HA de poisson | 0 | **608** |
| | 200 | **494** |
| HA végétale mixte (colza, tournesol...) | 0 | **608** |
| | 200 | **461** |
| Comparatif N°2 (TOFA) | 0 | **608** |
| | 200 | **438** |

## Revendications

1. Utilisation d'une ou plusieurs huile(s) acide(s), directement issue(s) de l'acidification d'au moins une pâte de neutralisation comme additif de lubrifiance de carburant pour moteur à combustion interne, la pâte de neutralisation étant obtenue par un procédé de raffinage d'au moins une huile choisie parmi une huile végétale et/ou animale.

2. Utilisation selon la revendication 1, dans laquelle la ou les huiles acides présentent une teneur en acides gras libres supérieure ou égale à 5% en poids.

3. Utilisation selon la revendication 1 ou 2, dans laquelle la ou les huiles acides présentent une teneur en triglycérides supérieure ou égale à 5% en poids.

4. Utilisation selon l'une quelconque des revendications 1 à 3, dans laquelle la ou les huiles acides présentent une teneur en acides gras contenant plus de deux insaturations inférieure ou égale à 40% en poids.

5. Utilisation selon l'une quelconque des revendications 1 à 4, dans laquelle la ou les huiles acides présentent une teneur en acides gras C₁₈ :1 et C₁₈ :2 supérieure ou égale à 40% en poids.

6. Utilisation selon l'une quelconque des revendications 1 à 5, dans laquelle la ou les huiles acides présentent un point d'écoulement inférieur ou égal à -3°C, de préférence inférieur ou égal à -9°C.

7. Utilisation selon l'une quelconque des revendications 1 à 6, dans laquelle la ou les huiles acides sont directement obtenues par un procédé d'acidification comprenant :
a) une étape d'extraction des acides gras présents dans au moins une pâte de neutralisation issue du raffinage d'une ou plusieurs huiles choisie(s) parmi une huile végétale et/ou une huile animale, cette étape d'extraction étant réalisée en milieu acide dans des conditions efficaces pour former une phase aqueuse et une phase organique comprenant lesdits acides gras,
b) une étape de séparation au cours de laquelle on sépare ladite phase organique précédemment formée et on la récupère.

8. Utilisation selon la revendication 7, dans laquelle la pâte de neutralisation traitée à l'étape a) est obtenue par un procédé de raffinage d'une huile végétale et/ou animale comprenant :
a1) une étape de saponification d'une huile végétale ou animale ou d'un mélange d'huiles végétales et/ou animales dans des conditions efficaces pour saponifier les acides gras libres présents dans l'huile ou le mélange d'huiles et pour former une pâte de neutralisation,
a2) une étape de séparation de l'huile ou du mélange d'huiles et de la pâte de neutralisation formée lors de l'étape a1).

9. Utilisation d'une ou plusieurs huile(s) acide(s) selon l'une quelconque des revendications 1 à 8, dans une composition de carburants pour moteur à combustion interne présentant une teneur en soufre inférieure à 500ppm.

10. Utilisation selon la revendication 9 dans laquelle la ou les huile(s) acide(s) sont présentes dans la composition de carburants en une teneur inférieure ou égale à 1000ppm en poids.

## Patentansprüche

1. Verwendung eines oder mehrerer saurer Öl(e), direkt aus der Versauerung mindestens einer Neutralisierungspaste stammend, als Kraftstoffschmieradditiv für einen Innenverbrennungsmotor, wobei die Neutralisierungspaste durch ein Raffinierungsverfahren mindestens eines Öls erhalten wird, das aus einem pflanzlichen und/oder tierischen Öl ausgewählt wird.

2. Verwendung nach Anspruch 1, wobei das oder die saure(n) Öl(e) einen Gehalt an freien Fettsäuren größer oder gleich 5 Gew.-% aufweisen.

3. Verwendung nach Anspruch 1 oder 2, wobei das oder die saure(n) Öl(e) einen Gehalt an Triglyzeriden größer oder gleich 5 Gew.-% aufweisen.

4. Verwendung nach einem der Ansprüche 1 bis 3, wobei das oder die saure(n) Öl(e) einen Gehalt an Fettsäuren, die mehr als zwei Nicht-Sättigungen enthalten, kleiner oder gleich 40 Gew.-% aufweisen.

5. Verwendung nach einem der Ansprüche 1 bis 4, wobei das oder die saure(n) Öl(e) einen Gehalt an Fettsäuren C₁₈:1 und C₁₈:2 größer oder gleich 40 Gew.-% aufweisen.

6. Verwendung nach einem der Ansprüche 1 bis 5, wobei das oder die saure(n) Öl(e) einen Stockpunkt kleiner oder gleich -3 °C, vorzugsweise kleiner oder gleich -9 °C aufweisen.

7. Verwendung nach einem der Ansprüche 1 bis 6, wobei das oder die saure(n) Öl(e) direkt durch ein Versauerungsverfahren erhalten werden, Folgendes umfassend:
a) einen Schritt des Extrahierens der in mindestens einer Neutralisierungspaste vorhandenen Fettsäuren, die aus der Raffinierung eines oder mehrerer Öle stammt, die aus einem pflanzlichen und/oder tierischen Öl ausgewählt werden, wobei dieser Schritt des Extrahierens im sauren Milieu unter wirksamen Bedingungen durchgeführt wird, um eine wässrige Phase und eine organische Phase die die Fettsäuren umfaßt zu bilden ,
b) einen Schritt des Trennens, im Laufe dessen man die zuvor gebildete organische Phase trennt, und diese wiedergewinnt.

8. Verwendung nach Anspruch 7, wobei die in Schritt a) behandelte Neutralisierungspaste durch ein Raffinierungsverfahren eines pflanzlichen und/oder tierischen Öls erhalten wird, Folgendes umfassend:
a1) einen Schritt der Verseifung eines pflanzlichen oder tierischen Öls oder einer Mischung an pflanzlichen und/oder tierischen Ölen, unter wirksamen Bedingungen zum Verseifen der freien Fettsäuren, die in dem Öl oder in der Mischung an Ölen vorhanden sind und zum Bilden einer Neutralisierungspaste,
a2) einen Schritt des Trennens des Öls oder der Mischung an Ölen und der in Schritt a1) gebildeten Neutralisierungspaste.

9. Verwendung eines oder mehrerer saurer Öls (Öle) nach einem der Ansprüche 1 bis 8 in einer Kraftstoffzusammensetzung für Innenverbrennungsmotor, einen Gehalt an Schwefel von weniger als 500 ppm aufweisend.

10. Verwendung nach Anspruch 9, wobei das oder die saure(n) Öl(e) in der Kraftstoffzusammensetzung mit einem Gehalt kleiner oder gleich 1000 Gew.-ppm vorhanden sind.

## Claims

1. Use of one or more acid oils, directly derived from the acidification of at least one soapstock, as lubricity additive of internal combustion engine fuel, the soapstock being obtained by a process of refining at least one oil selected from a vegetable and/or animal oil.

2. Use according to claim 1, wherein said one or more acid oils have a content of free fatty acids of greater than or equal to 5% by weight.

3. Use according to claim 1 or 2, wherein said one or more acid oils comprise a content of triglycerides of greater than or equal to 5% by weight.

4. Use according to any one of claims 1 to 3, wherein said one or more acid oils have a content of fatty acids containing more than two unsaturations of less than or equal to 40% by weight.

5. Use according to any one of claims 1 to 4, wherein said one or more acid oils have a content of C₁₈:1 and C₁₈:2 fatty acids of greater than or equal to 40% by weight.

6. Use according to any one of claims 1 to 5, wherein said one or more acid oils have a pour point of less than or equal to -3°C, preferably less than or equal to -9°C.

7. Use according to any one of claims 1 to 6, wherein said one or more acid oils are directly obtained by an acidification process comprising:
a) a step of extracting the fatty acids present in at least one soapstock derived from the refining of one or more oils selected from a vegetable oil and/or an animal oil, this extraction step being carried out in an acid medium under conditions effective for forming an aqueous phase and an organic phase comprising said fatty acids,
b) a separation step during which said previously formed organic phase is separated and recovered.

8. Use according to claim 7, wherein the soapstock treated in step a) is obtained by a process of refining a vegetable and/or animal oil comprising:
a1) a step of saponifying a vegetable or animal oil or a mixture of vegetable and/or animal oils under conditions effective for saponifying the free fatty acids present in the oil or the mixture of oils and for forming a soapstock,
a2) a step of separating the oil or the mixture of oils and the soapstock formed during step a1).

9. Use of one or more acid oils according to any one of claims 1 to 8, in an internal combustion engine fuel composition having a sulphur content of less than 500 ppm.

10. Use according to claim 8 wherein said one or more acid oils are present in the internal combustion engine fuel composition in a content of less than or equal to 1000 ppm by weight.
